Europäisches Patentamt

European Patent Office

Office européen des brevets

(19)

(11) Veröffentlichungsnummer: **0 069 061**
**B1**

(12) **EUROPÄISCHE PATENTSCHRIFT**

(45) Veröffentlichungstag der Patentschrift:
23.01.85

(51) Int. Cl.⁴: **G 01 N 21/89**

(21) Anmeldenummer: **82810250.9**

(22) Anmeldetag: **11.06.82**

(54) Verfahren und Vorrichtung zum Überprüfen von Bahnmaterial.

(30) Priorität: 17.06.81 GB 8118575
17.06.81 GB 8118576
30.09.81 GB 8129538
27.11.81 GB 8135928

(43) Veröffentlichungstag der Anmeldung:
05.01.83 Patentblatt 83/1

(45) Bekanntmachung des Hinweises auf die Patenterteilung:
23.01.85 Patentblatt 85/4

(84) Benannte Vertragsstaaten:
**BE CH DE FR GB IT LI**

(56) Entgegenhaltungen:
**DE - A - 1 573 641**
**DE - A - 1 573 900**
**DE - B - 1 125 679**
**DE - B - 1 296 822**
**GB - A - 2 018 985**
**US - A - 3 803 474**
**US - A - 3 826 578**
**US - A - 3 843 890**
**US - A - 4 108 533**

**PATENTS ABSTRACTS OF JAPAN, Band 2, Nr. 149, 22. Dezember 1978, Seite 9550 E 78;**

(73) Patentinhaber: **CIBA-GEIGY AG, Postfach, CH-4002 Basel (CH)**

(72) Erfinder: **Ikin, John Bruce, 40 Marine Avenue, Leigh-on-Sea Essex (GB)**

BUNDESDRUCKEREI BERLIN

**Beschreibung**

Die Erfindung betrifft ein Verfahren und eine Vorrichtung zum Überprüfen von Bahnmaterial gemäß Oberbegriff von Patentanspruch 1 bzw. 13.

Ein solches Verfahren und eine entsprechende Vorrichtung sind beispielsweise in US-A-3 843 890 beschrieben. Bei diesem bekannten Verfahren unterliegt das resultierende Signal notgedrungen abrupten Veränderungen, wenn der Strahl die Kanten der Bahn überstreicht, wobei durch diese Veränderungen im Signalverarbeitungsschaltkreis Transienten erzeugt werden. Um die hierdurch stets auftretende Tendenz zur Auslösung von ungewollten Alarmsignalen zu beseitigen, ist gewöhnlich erforderlich, das System für kurze Zeit nach dem Überqueren der Bahnkante entweder abzuschalten oder sein Ansprechen zu modifizieren.

Zusätzlich wird ein weiteres Problem durch jedes Streulicht verursacht, das oft in der unmittelbaren Umgebung der Strahlachse z. B. durch Streuung an einer leicht angelaufenen oder beschlagenen reflektierenden Oberfläche auftritt. Dieses Auftreten von Streulicht führt unvermeidlich zu einer Abrundung der Schulter der Wellenform des Signals jeweils in dem Augenblick, in dem der Abtaststrahl eine der beiden Bahnkanten überquert. Auch hierdurch kann ein ungewolltes, eine nicht vorhandene Fehlstelle anzeigendes Alarmsignal ausgelöst werden. Diese Effekte neigen dazu, das System für ein vollständiges Überprüfen der Materialbahn genau bis zu ihren beiden Kanten ungeeignet zu machen, wobei die nicht überprüften Randstreifen mehrere Millimeter breit sein können. Dies ist für manche Bahnmaterialarten nicht zulässig, z. B. wenn vorgeschnittene Bahnen aus lichtempfindlichem Material auf Fehler untersucht werden sollen.

Es ist demnach eine Aufgabe der Erfindung, die Voraussetzungen dafür zu schaffen, daß die zu überprüfenden Materialbahnen möglichst über ihre gesamte Breite abgetastet werden können bzw. daß die nicht überprüfbaren Randstreifen möglichst schmal gehalten oder vorzugsweise sogar ganz eliminiert werden können.

Gemäß US-A-3 803 474 wird versucht, gewisse beim Überstreichen der Bahnkanten auftretende Probleme durch elektronische Austasttechniken zu vermeiden. Zur Lösung der der Erfindung zugrunde liegenden Aufgabe sind diese Techniken jedoch ungeeignet.

Nach der DE-A-1 573 641 wird das Verhältnis von Nutz- zu Störsignal bei einer Bahnabtasteinrichtung dadurch zu verbessern getrachtet, daß das Reflexionsvermögen der bewegten Bahn simuliert wird. Dieses bekannte Verfahren ist jedoch zur Vermeidung von Kantenproblemen völlig ungeeignet.

Die der Erfindung zugrunde liegende Aufgabe wird gemäß einem ersten Aspekt der Erfindung gelöst durch ein Verfahren der eingangs beschriebenen Art, welches die im kennzeichnenden Teil des Anspruchs 1 beschriebenen Merkmale aufweist. Vorzugsweise weist dabei das Verfahren außerdem die im kennzeichnenden Teil des Anspruchs 2 angeführten Merkmale auf.

Unter »Licht« wird hierbei nicht nur sichtbares sondern auch infrarotes und ultraviolettes Licht verstanden. Das Verfahren nach der vorliegenden Erfindung ist dabei besonders für das Abtasten von lichtempfindlichem photographischem Bahnmaterial geeignet. Ein solches Bahnmaterial umfaßt Material, welches auf einer transparenten Kunststoffunterlage eine lichtempfindliche Schicht trägt, die sowohl lichtdurchlässig als auch lichtstreuend ist. Daher ist Licht, das ein solches Material passiert hat, ein diffuses oder Streulicht. Diese Art von photographischem Material muß auf Fehler im Überzug mit nichtaktinischen Lichtstrahlen abgetastet werden, wobei gewöhnlich infrarotes Licht verwendet wird.

Der Überzug auf photographischem Filmmaterial hat auch die Eigenschaft, Licht partiell zu reflektieren. Besitzt das Bahnmaterial eine Trägerschicht aus Papier, so reflektiert es das Abtastlicht vollständig. Daher können die beim Abtasten von photographischem Bahnmaterial erhaltenen Signale je nach den Umständen entweder durch Auflicht oder Durchlicht hervorgerufen werden.

Beim Verfahren nach der Erfindung wird vorzugsweise ein Laserabtaststrahl verwendet.

Ein bevorzugter Aspekt des Verfahrens nach der Erfindung benutzt die Tatsache, daß die Bahn nicht nur lichtdurchlässig ist, sondern auch das Licht streut oder diffus macht.

Gemäß diesem Erfindungsaspekt trifft ein polarisierter Strahl in der Abtastungszone auf die Bahn auf und tritt durch sie hindurch. Infolge der lichtstreuenden Eigenschaft der Bahn ist das Durchlicht nicht mehr stark polarisiert. Ein Anteil dieses Lichtes trifft nun zunächst auf ein vorzugsweise streifen- oder blättchenförmiges Polarisierelement auf, welches die Intensität des Lichtstrahls weiter dämpft, worauf er in den Empfänger gelangt. Der Dämpfungsgrad wird durch die Orientierung des Elements nicht wesentlich beeinflußt. An den Abtastendpunkten jenseits der beiden Bahnkanten bleibt der Strahl polarisiert, da er dort die Bahn nicht passiert hat und durch das Polarisierelement in Übereinstimmung mit dessen Orientierung gedämpft wird. So können also durch Orientierung der Polarisation der Lichtquelle oder der Polarisatorscheibe die aus dem Durchtritt des Lichts durch das die Diffusion des Durchlichtes verursachende Material resultierenden Signale mit denjenigen, die den Abtastendpunkten entsprechen, in enge Übereinstimmung gebracht werden. Jedoch kann angenommen werden, daß das System hierdurch gegen Defekte in der Bahn unempfindlich gemacht wurde. Während dies für größere Fehlerstellen, z. B. große Löcher oder das Fehlen der Diffusionsschicht auf einer im übrigen transparenten Trägerbahn zutrifft, führt die Anwesenheit weniger auffälliger Fehlerstellen zur Modifizierung der Intensität des Durchlichtes ohne ein nennenswertes Abweichen von der Beliebigkeit der Polarisation zu verursachen. Das System bleibt daher gegenüber solchen Fehlern hinreichend empfindlich. Es ist in der Praxis üblich, getrennt Detektoren für grobe Defekte vorzusehen, welche einen kleinen Überzug tragenden Bahnbereich und andere grobe Fehler anzeigen. Im übrigen ist Streulicht ebenfalls vorwiegend polarisiert. Es kann durch einfache Analyse gezeigt werden, daß Signaltransienten im Augenblick des Überquerens der Kanten der Bahn bei Anwendung des Verfaherns nach der Erfindung fast völlig vermieden werden. Beim praktischen Betrieb eines auf diesem Verfahren beruhenden Systems war es möglich, die beim Abtasten nicht erfaßten Streifen an den Kanten der Bahn auf eine Breite von nur 0,5 mm zu reduzieren.

Bei einem weiteren Aspekt des Verfahrens nach der Erfindung wird von den reflektierenden Eigenschaften der in Bewegung befindlichen Bahn Gebrauch gemacht, und zwar entsprechend den im kennzeichnenden Teil des Anspruchs 4 beschriebenen Merkmalen.

Gewöhnlich wird dabei die Intensität des von den Lichtumlenkmitteln umgelenkten Lichtes größer sein als die Intensität des von der Bahn reflektierten Lichtes; daher wird vorzugsweise ein lichtdämpfender Filter in den Pfad des umgelenkten Lichtes gestellt.

Ist das Lichtumlenkmittel ein lichtreflektierendes Element, so wird entsprechend den Merkmalen des kennzeichnenden Teils des Anspruchs 7 verfahren, ist es ein Spiegel, so verfährt man vorzugsweise gemäß den im kennzeichnenden Teil der Ansprüche 8 bzw. 9 beschriebenen Merkmalen.

Die Lichtumlenkungsmittel können jedoch auch lichtleitende Elemente, insbesondere eine aus Glasfasern bestehende Lichtleiteranordnung, oder auch lichtbrechende Mittel sein, durch welche das Licht des die Bahnkanten überquerenden Abtaststrahls in den Empfänger umgelenkt wird.

Abhängig davon, ob die Bahn spiegelnd oder diffus reflektiert, ist es möglich, die Art der Umlenkmittel zu ändern, um ein Signal zu erzielen, das demjenigen des von der Bahn reflektierten Lichtes angepaßt ist, worauf man durch Verwendung eines lichtdämpfenden Filters Signaltransienten, die während der Bahnabtastung im Augenblick des Überquerens der Bahnkanten auftreten, fast vollständig eliminieren kann. In der Praxis wurde bei einem auf einer dieser Verfahrensweisen basierenden System die Breite der nicht überprüfbaren Streifen längs den Bahnkanten auf nur 0,5 mm herabgesetzt.

Beim Verfahren nach der Erfindung wird zum Abtasten vorzugsweise ein Laserstrahl verwendet, und zwar insbesondere gemäß den im kennzeichnenden Teil des Anspruchs 11 beschriebenen Maßnahmen.

Diese besondere Arbeitsweise nach dem erfindungsgemäßen Verfahren wird vor allem beim Abtasten einer das Licht reflektierenden Bahn angewandt.

In einigen Fällen ist es erforderlich zu wissen, ob der Abtaststrahl eine Kante der Bahn überquert, so daß alsdann ein dem Überqueren der Bahnkante durch den Strahl entsprechendes elektronisches Signal erzeugt werden kann, z. B. zum Zwecke einer elektronischen Auswahl von Signalen, die nur zur Überprüfung der Bahn für sich, oder auch zum Verfolgen eines linearen Defekts dienen sollen.

So wird bei der Arbeitsweise, bei welcher Licht durch die Bahn durchtritt, durch Zwischenschaltung einer Polarisatorscheibe, wie weiter oben beschrieben, die Bahnkante für das zum Lichtsammelempfänger gelenkte Licht durchlässig. Man kann dabei einen Anteil des in den Polarisatorstreifen eintretenden Lichtes zum Fenster eines Hilfsphotodetektors ablenken. Dieses abgelenkte Licht kann ein fester Anteil der einfallenden Strahlintensität sein, wenn der Strahl nicht auf die Bahn fällt, oder der gleiche feste Anteil des von der Bahn zerstreuten Lichtes. Das hieraus stammende elektronische Signal wird so im Augenblick des Überquerens einer Bahnkante durch den Abtaststrahl einer abrupten Veränderung unterworfen. Diese plötzliche Änderung kann zu elektronischen Schaltzwecken benutzt werden. Um einen solchen Anteil des Lichtes abzulenken, kann ein Strahlenspalter in den Strahlengang unmittelbar vor dem Lichtdämpfungsfilter eingeschoben werden.

Ein weiterer Aspekt der vorliegenden Erfindung besteht in einer Vorrichtung zum Abtasten einer bewegten Materialbahn. Die Hauptmerkmale dieser Vorrichtung sind im kennzeichnenden Teil des Patentanspruchs 13, weitere Merkmale bevorzugter Ausführungsformen der Erfindung sind im kennzeichnenden Teil der Ansprüche 19 bis 22 beschrieben.

In einer weiteren Ausführungsform der Vorrichtung nach der Erfindung umfassen den Lichtstrahl lenkende Mittel eine Lichtlenkanordnung, welche das die Bahn passierende Durchlicht zum Lichtempfänger hinlenkt.

Weitere Einzelheiten und Vorteile der Erfindung werden im folgenden an Hand der Zeichnung erläutert, in welcher Teile gleicher Funktion die gleichen Bezugsziffern tragen.

Fig. 1 bis 3 und 5a und 5b betreffen eine Ausführungsform der Vorrichtung bekannter Bauart und das mit ihr durchgeführte Verfahren, bei welcher Licht durch die Materialbahn durchtritt;

Fig. 6a bis 7c betreffen eine erste Ausführung der Vorrichtung und des in ihr durchgeführten Verfahrens nach der Erfindung, bei welcher ebenfalls Licht durch die Materialbahn durchtritt;

Fig. 8 bis 10b betreffen eine Ausführungsform einer bekannten Vorrichtung und des Verfahrens, bei welcher das Licht von der Bahn reflektiert wird, und die

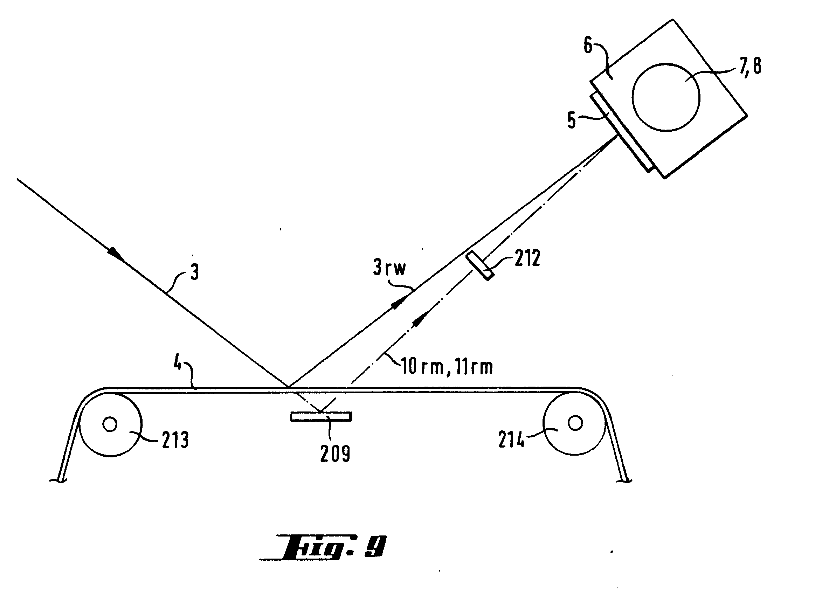

Fig. 4c und 4b beziehen sich auf beide Ausführungsformen bekannter Vorrichtungen.

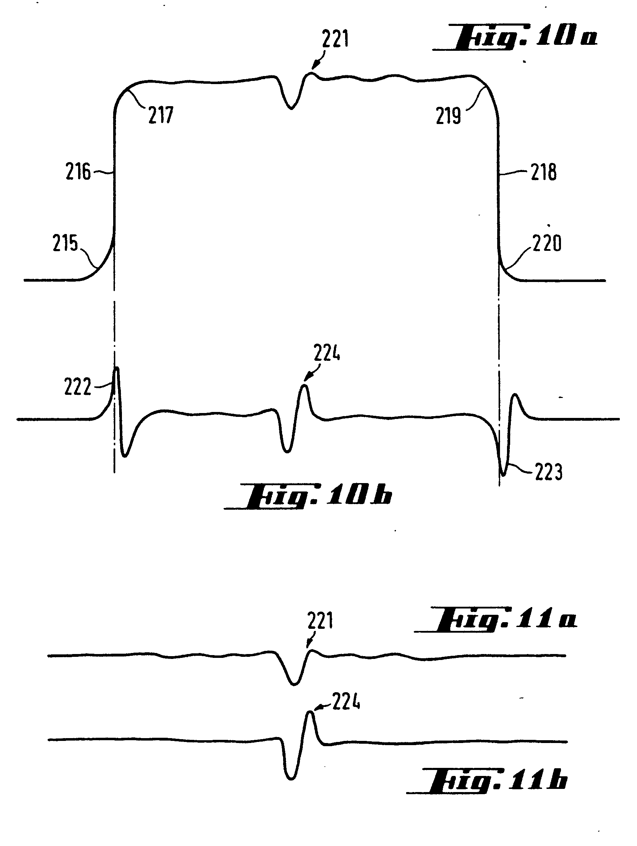

Schließlich betreffen Fig. 11a bis 16b eine zweite Ausführungsform der Vorrichtung nach der Erfindung und des mit ihr durchgeführten Verfahrens, in welcher das Abtastlicht ebenfalls von der Bahn reflektiert wird.

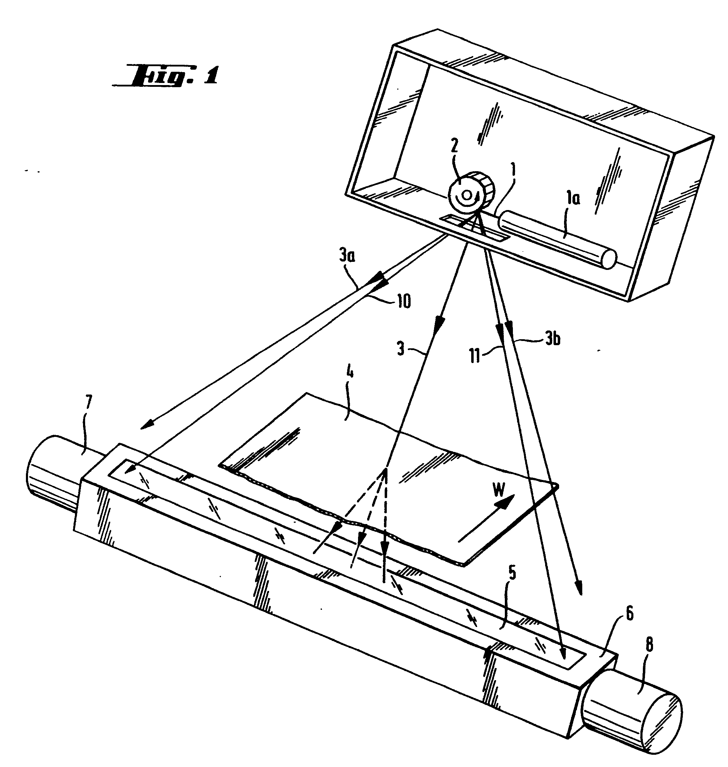

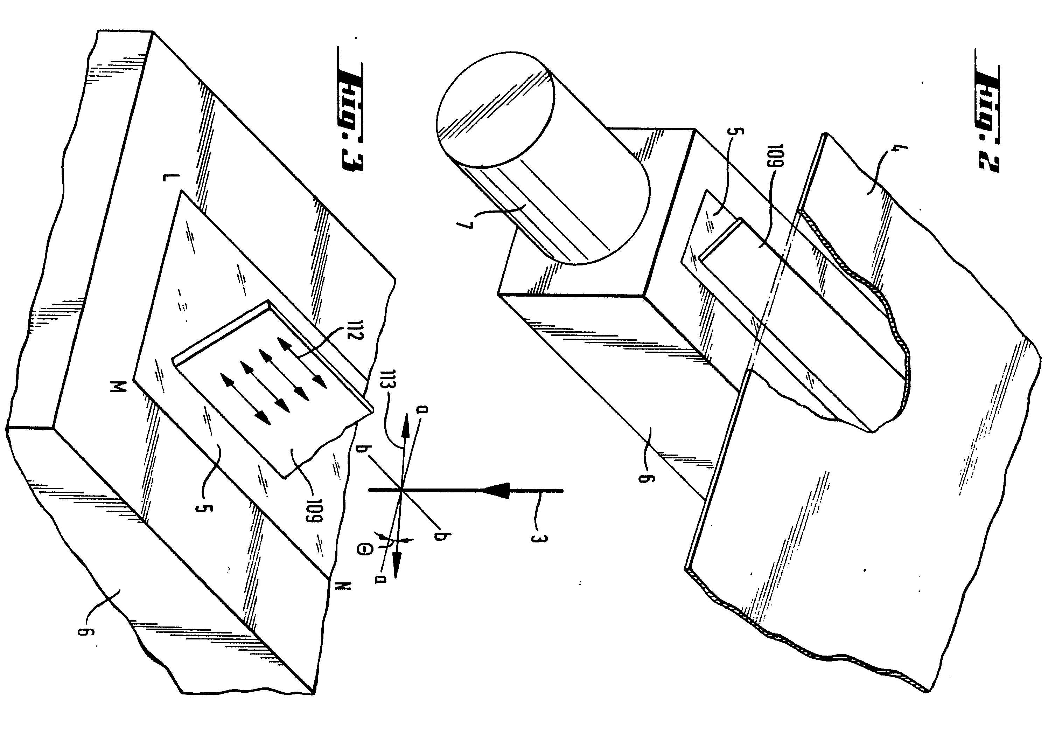

Das bekannte in Fig. 1 gezeigte System zur Überprüfung einer Materialbahn 4 mittels Durchlicht umfaßt eine Laserquelle 1a, aus welcher ein Laserstrahl 1 auf ein rotierendes Spiegelrad 2 geworfen wird, von welchem ein reflektierter Strahl 3 ausgeht, der einen von den am weitesten abgelenkten Strahlenwegen 3a und 3b begrenzten Bereich überstreicht, wobei sein Auftreffpunkt auf seinem Wege von 3a nach 3b auch die Bahn 4 senkrecht zur durch den Pfeil W angedeuteten Bewegungsrichtung derselben überquert. Der Strahl 3 wird durch die Bahn 4 modifiziert und teilweise durchgelassen, und fällt in das Fenster 5 des Empfängers 6 ein, der mit den Photozellen 7 und 8 ausgestattet ist. Die Strahlenwege 10 und 11 illustrieren Bereiche, in denen der Abtaststrahl während seiner Abtastbewegung nicht auf die Bahn auffällt, sondern in denen er direkt in das Fenster 5 des Empfängers 6 gelangt.

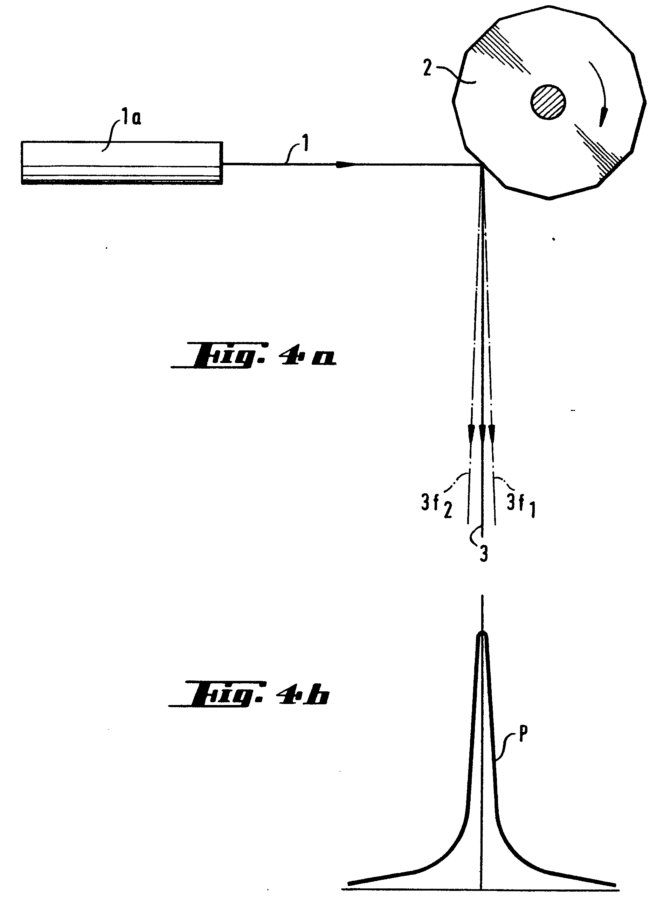

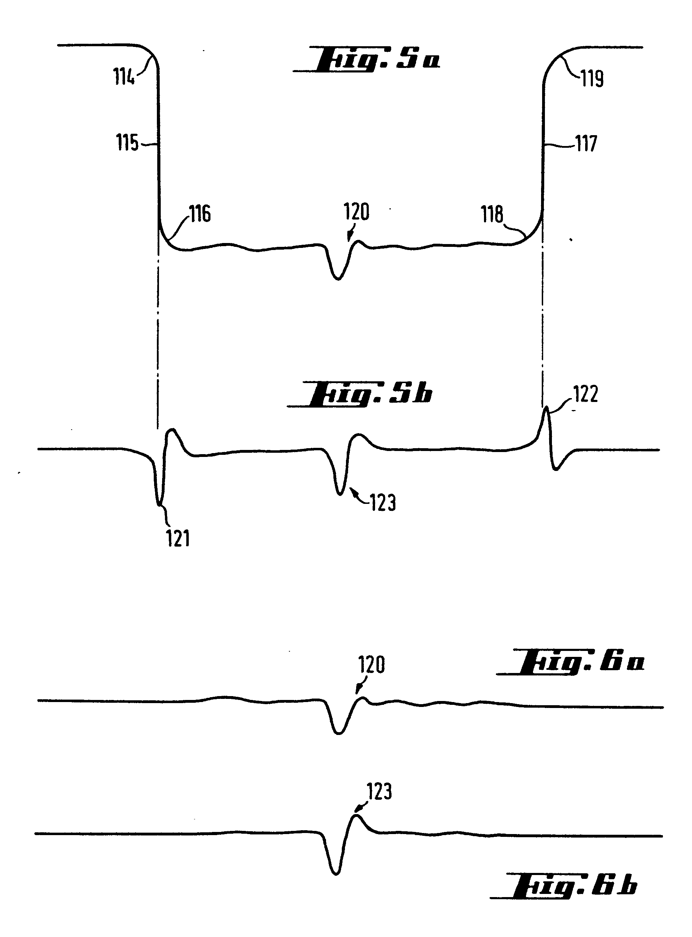

Die Fig. 2 zeigt in derselben Ausführungsform der in Fig. 1 gezeigten Vorrichtung bekannter Bauart einen polarisierenden Streifen 109, der zwischen die Bahn 4 und die Öffnung des Fensters 5 des Empfängers 6 eingeschoben ist. Die Ebene des Polarisatorstreifens 109 ist in bezug auf die Abtastebene wie gezeigt unter einem spitzen Winkel geneigt. Der Polarisatorstreifen 109 ist über die Bahnlängskanten zu beiden Seiten neben der Bahn 4 hervorstehend angeordnet und so orientiert, daß er das von ihm reflektierende Licht dämpft.

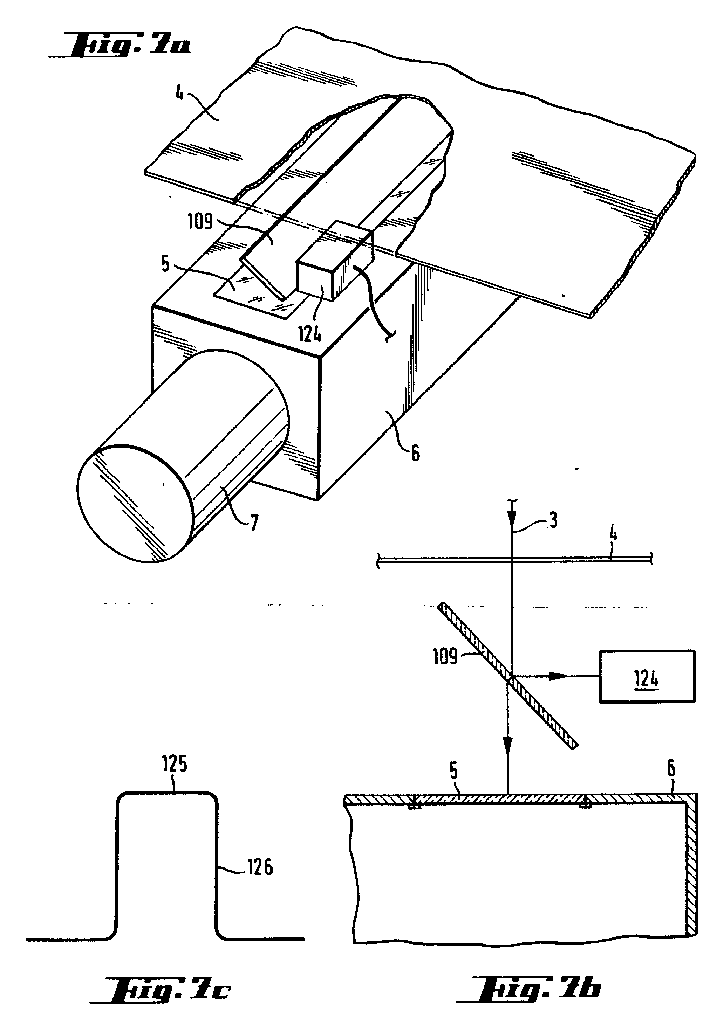

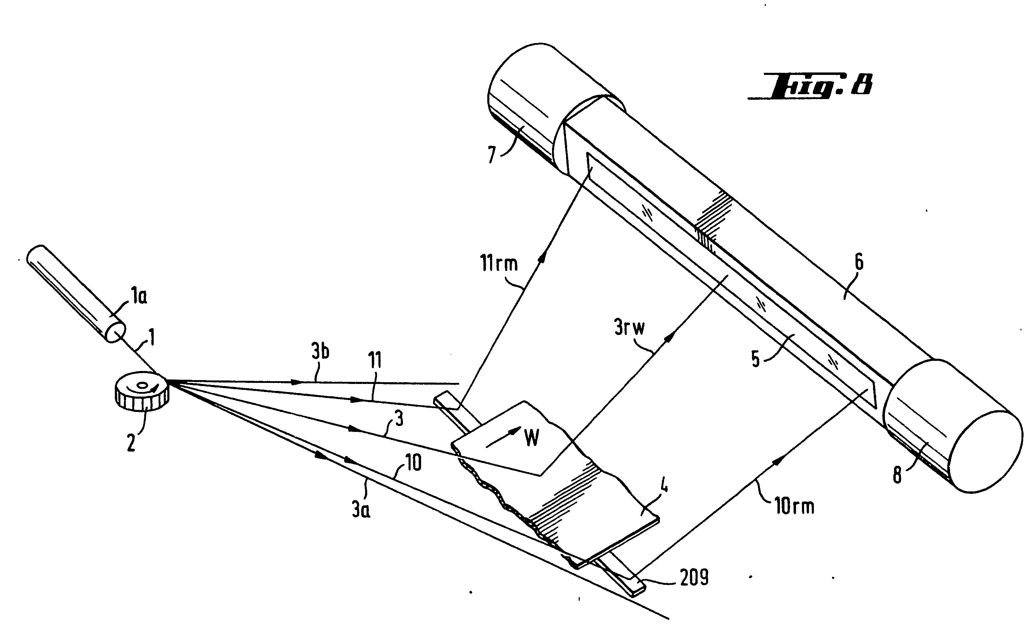

In Fig. 3 sind durch Pfeile bevorzugte Polarisationsrichtungen 112 in dem in Fig. 2 gezeigten Polarisatorstreifen 109 angedeutet. Hierdurch wird der Lichtstrahl 1 und damit auch der Lichtstrahl 3 polarisiert. Der Strahl ist in dieser Figur in normaler Richtung zum Fenster 5 bei Abwesenheit der Bahn 4 gezeigt. Die Polarisierungsrichtung 113 des Strahls 3 ist so gewählt, daß sie einen kleinen Winkel $\theta$ mit der zum Rand L-M des Fensters 5 parallelen Achse a-a bildet. Entsprechend bildet die Polarisationsrichtung 113 einen Winkel $(90-\theta)$ mit der zum Rand M-N des Fensters 5 parallelen Achse b-b.

Die Fig. 4a und 4b illustrieren die Auswirkung eines Spiegelrades, dessen Spiegelflächen leicht angelaufen oder beschlagen sind.

Dabei zeigt Fig. 4a, wie der Strahl 1 aus der Laserquelle durch eine leicht angelaufene Spiegelfläche des Spiegelrades 2 reflektiert wird, wobei ein Hauptstrahl 3 sowie ein schmaler Strahlenkegel, der beispielsweise durch die Streustrahlen $3f_1$ und $3f_2$ begrenzt ist, axialsymmetrisch um den Hauptstrahl 3 herum gebildet wird. Dieser Strahlenkegel wird im folgenden auch als Streulicht bezeichnet.

Die Fig. 4b zeigt das Profil P des den Hauptstrahl umgebenden Streulichtkegels.

Die Fig. 5a und 5b zeigen, inwiefern das oben beschriebenen bekannte System zur Überprüfung von Bahnkantenbereichen ungeeignet ist.

Fig. 5 zeigt den Verlauf des kombinierten ungefilterten Signals aus den Photozellen 7 und 8, während der Abtaststrahl 3 den Bereich zwischen den Grenzstrahlengängen 3a und 3b durchläuft.

Unmittelbar bevor der Hauptstrahl 3 auf die Materialbahn 4 gelangt, fällt bereits ein vorauslaufender Anteil mit Streustrahl $3f_1$ auf die Bahn 4 ein und wird durch diese partiell gedämpft, bevor er durch das Fenster 5 in den Empfänger 6 gelangt. Die Signalamplitude beginnt daher, wie bei 114 angedeutet, abzufallen. Mit fortschreitender Abtastung fällt nun der Hauptstrahl 3 auf der Bahn 4 ein, was einen steilen Abfall des Signals, wie bei 115 gezeigt, verursacht. Hierauf wird zusätzlich ein nachlaufender Anteil des Streulichts gedämpft, was zu einem weiteren, langsameren Abfall, wie bei 116 gezeigt, führt. Eine gleichartige abrupte Änderung 117 mit vorlaufenden und nachlaufenden Abrundungseffekten 118 und 119 erleidet die Signalamplitude nun im umgekehrten Sinne, sobald der Abtaststrahl 3, quer über die gegenüberliegende Bahnkante streichend, die Bahn 4 verläßt. Die Wirkung einer Fehlerstelle in der Bahn oder in ihrem Überzug ist durch den Ausschlag 120 in Fig. 5a angedeutet.

Fig. 5b zeigt das Signal bei Anwendung eines geeigneten Hochpaßfilters. Die durch die abrupten Änderungen 115 und 117 der Lichtamplitude verursachten Transienten 121 bzw. 122 zusammen mit den Effekten 114, 116, 118 und 119 sind von derselben Größenordnung wie der Transient 123, der durch die obenerwähnte Fehlerstelle bei 120 erzeugt wird, und sind daher ohne geeignete Signalausblendung und sich daraus ergebende Verluste an Überprüfungsmöglichkeiten in der Nähe der Bahnkanten nicht von dem letztgenannten Transienten 123 unterscheidbar.

Die Fig. 6a und 6b veranschaulichen, wie gemäß der vorliegenden Erfindung die Überprüfung der Materialbahn mittels Durchlicht über die gesamte Bahnoberfläche hinweg erfolgen kann.

Die Fig. 6a zeigt, wie mit Hilfe eiens Polarisatorstreifens 109 zusammen mit einer korrekten Polarisierung des Abtaststrahls 3 das Signal beeinflußt werden kann, das beim Überstreichen des gesamten Bereiches zwischen den Strahlengängen 3a und 3b durch den Abtaststrahl 3 erzeugt wird.

Der Hauptstrahl 3 wird dabei vollständig und das zusammen mit ihm auftretende Streulicht ebenfalls vorwiegend längs der gleichen Ebene polarisiert. In jedem beliebigen Zustand unmittelbar vor oder nach dem Übertritt des Strahls 3 über eine Bahnkante wird jeder Strahl, sei es der Hauptstrahl 3 oder ein Strahl des ihn umgebenden Streulichtkegels, entweder durch den Polarisatorstreifen 109 durchgelassen und entsprechend dem Wert von $\theta$ polarisiert, oder er wird partiell durch die Bahn durchgelassen, wobei er am Polarisatorstreifen 109 beliebig polarisiert und anschließend um einen von $\theta$ unabhängigen

Betrag gedämpft wird. Man kann dabei einen solchen Wert für $\theta$ wählen, daß das von jedem solchen Strahl erzeugte Signal praktisch das gleiche ist, gleichgültig ob der Strahl auf die Bahn auftrifft oder nicht. Das resultierende kombinierte Signal ist daher im Augenblick des Übertritts des Strahls über die Kanten der Bahn im wesentlichen frei von Transienten. Der einzige verbleibende Transient 120 ist der durch eine echte Fehlerstelle erzeugte. Es ist daher nunmehr möglich, die gesamte Oberfläche der Bahn 4 zu überprüfen.

Die Fig. 6b zeigt das Signal 123 nach geeigneter Filterung, um abrupte Änderungen von langsamen zu unterscheiden.

Die Fig. 7a bis 7c zeigen, wie sich die Ausrüstung des Systems mit einem Bahnkantendetektor auswirkt.

Fig. 7a zeigt, wie durch geeignete Wahl des Neigungswinkels des Polarisatorstreifens 109 ein Anteil des am Rand der Bahn 4 vorbeifallenden oder durch die Bahn in der Nähe einer ihrer beiden Kanten gestreuten Lichtes durch die Oberfläche des Polarisatorstreifens 109 zu einem zweiten Empfänger oder Detektor 124 hin reflektiert werden kann. Das übrige Licht wird durch den Polarisatorstreifen 109 in der bereits beschriebenen Weise durchgelassen.

Die Fig. 7b zeigt schematisch die gleiche Anordnung wie die Fig. 7a, aber in Seitenansicht.

Die Fig. 7c zeigt das durch die Hilfsphotozelle 124 beim Überqueren einer Bahnkante durch den Abtaststrahl erzeugte Antwortsignal 125. Die steile Änderung 126 des Verlaufs der Signalkurve kann für elektronische Schaltzwecke verwendet werden.

Die Fig. 8 zeigt ein System bekannter Art, bei welchem die Überprüfung der Materialbahn mittels reflektiertem Licht erfolgt. Ein Laserstrahl 1 wird auf die rotierenden Facetten eines Spiegelrades 2 gerichtet, von welchen der reflektierte Strahl so gelenkt wird, daß er eine durch die Grenzstrahlen 3a und 3b begrenzte Abtaststrecke überstreicht und dabei auch auf die Bahn 4 fällt. Der Einfallspunkt des Abtaststrahls 3 überquert dabei die Bahn in einer zur Fortbewegungsrichtung W der Bahn senkrechten Richtung. Der Strahl 3 wird dabei modifiziert und partiell durch die Bahn als Strahl $3_{rw}$ reflektiert, der in das Fenster 5 des die Photozellen 7 und 8 enthaltenden Empfängers einfällt. Der Strahl 3 überstreicht bei seiner Abtastbewegung nicht nur die Bahn 4 sondern rechts und links derselben zusätzliche Bereiche, in denen er unverändert auf den Reflektionsstreifen 209 fällt. Als Einzelstrahlen in diesem Randbereich sind beispielsweise die Strahlen 10 und 11 gezeigt, die entlang den Richtungen 10rm bzw. 11rm reflektiert werden und in das gleiche Fenster 5 des Empfängers 6 einfallen.

Die Fig. 9 zeigt in Seitenansicht, wie ein Dämpfungsfilter 212 in den Pfad umgelenkter Strahlen wie z. B. der mit 10rm und 11rm bezeichneten hineingestellt werden kann. Die Dichte des Filters wird so gewählt, daß die durchschnittliche Stärke des durch die Photozellen 7 und 8 auf Grund des von der Bahn reflektierten Lichtes erzeugten elektrischen Signals gleich der durchschnittlichen Stärke des als Folge des durch den Spiegel 209 über das Filter 212 zum Empfänger 6 umgelenkten Lichtes erzeugten Signals ist. In dieser Figur läuft die Bahn über die beiden Trägerwalzen 213 und 214.

Es sei erneut auf die Fig. 4a und 4b hingewiesen, die die Wirkung einer leicht angelaufenen Spiegeloberfläche des Spiegelrades zeigen, wodurch ein enger Strahlenkegel erzeugt wird, dessen Mantel durch die beiden Streulichtstrahlen $3f_1$ und $3f_2$ gegeben ist.

Die Fig. 10a und 10b zeigen Kurven, die illustrieren, daß das System ohne das Vorhandensein des Filters 212 nicht in der Lage wäre, die sich entlang der Bahnkanten erstreckenden Bereiche der Bahn zu überprüfen.

Die Fig. 10a zeigt, wie das kombinierte in den Photozellen 7 und 8 erzeugte ungefilterte Signal sich ändert, während der Abtaststrahl 3 die Strecke zwischen den Grenzstrahlengängen 3a und 3b überstreicht.

Unmittelbar bevor der von 3a her ankommende Hauptstrahl 3 auf die Bahn 4 gelangt, trifft bereits ein Strahlenanteil $3f_1$ auf die Bahn 4 auf und wird von ihr partiell reflektiert, um in das Fenster 5 des Empfänges 6 einzufallen. Die Amplitude des Signals beginnt daher bei 215 anzusteigen. Beim Fortschreiten des Abtastvorganges trifft nun der Hauptstrahl 3 auf die Bahn 4 auf, und das Signal steigt schnell an, wie bei 216 erkennbar ist. Anschließend wird ein Teil des Streulichtes zusätzlich reflektiert, wodurch der weitere langsamere Anstieg des Signals bei 217 verursacht wird. Der gleiche steile Abfall 218 und die Abrundungseffekte 219 und 220 ereignen sich in umgekehrten Sinne, wenn der Abtaststrahl die Bahn 4 beim Überstreichen der gegenüberliegenden Bahnkante verläßt. Ein typisches Antwortsignal beim Auftreffen des Strahls 3 auf eine Fehlerstelle in der Bahn oder im sie bedeckenden Überzug ist bei 221 dargestellt.

Die Fig. 10b zeigt den Kurvenverlauf des Signals nach dem Durchgang durch ein geeignetes Hochpaßfilter. Daraus ersieht man, daß die durch die steilen Änderungen 216 und 218 sowie die Abrundungseffekte 215, 217, 219 und 220 hervorgerufenen Transienten 222 und 223 in der gleichen Größenanordnung liegen wie der durch eine Schadstelle verursachte Transient 224 und daher ohne geeignete Signalausblendung und einen entsprechenden Verlust bei der Überprüfung der Bahn über ihre gesamte Oberfläche nicht vom Transienten 224 unterschieden werden können.

Die Fig. 11a und 11b veranschaulichen, wie entsprechend dem Erfindungsaspekt des Überprüfens einer Materialbahn mit Auflicht eine Überprüfung der gesamten Bahnoberfläche verwirklicht werden kann.

Die Fig. 11a zeigt dabei, wie das kombinierte von den Photozellen 7 und 8 stammende, unverarbeitete Signal sich ändert, während der Abtaststrahl 3 die Strecke zwischen den Grenzstrahlengängen 3a und 3b überstreicht.

Während jedem beliebigen Stadium unmittelbar vor dem Überqueren einer Bahnkante durch
den Abtaststrahl 3 wird ein Strahl, gleichgültig,
ob es sich dabei um den Hauptstrahl 3 oder einen
Strahl des Streulichtkegels handelt, entweder
von der Bahn 4 reflektiert, so daß er in den Empfänger 6 einfällt und damit dessen Photozellen 7
und 8 aktiviert, oder er wird mittels des Spiegels
209 und durch das Filter 212 hindurch in den gleichen Empfänger und zu dessen Photozellen umgelenkt. Das von jedem derartigen Einzelstrahl
verursachte Signal ist daher praktisch das gleiche, unabhängig davon, ob der Strahl auf die
Materialbahn 4 aufgetroffen ist, oder ob er an ihr
seitlich vorbeigegangen ist. Das resultierende
kombinierte Signal ist daher im wesentlichen frei
von durch die Überquerung der Bahnkanten verursachten Transienten. Der einzige verbleibende
Transient 221 ist der durch eine tatsächlich vorhandene Fehlerstelle verursachte. Es ist daher
nunmehr möglich, die Bahn 4 auf ihrer gesamten
Oberfläche zu überprüfen.

Die Fig. 11b zeigt das Signal nach einer geeigneten Hochpaßfilterung zwecks Unterscheidung
von abrupten und langsamen Veränderungen.

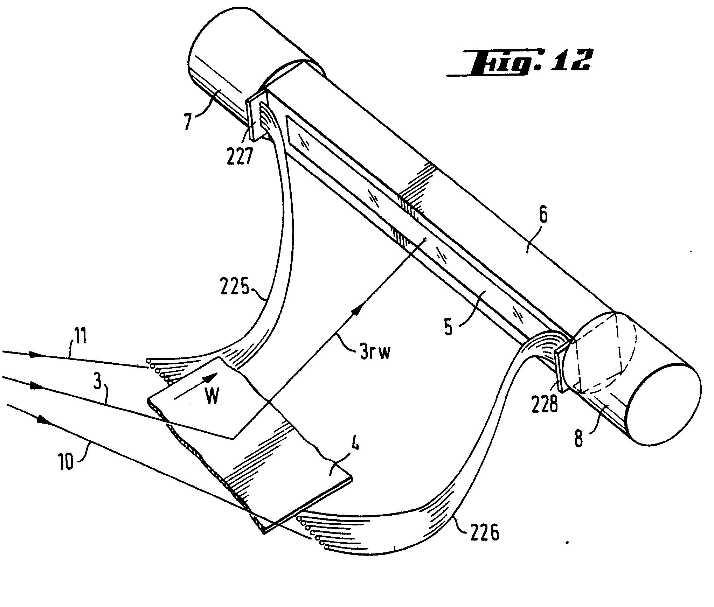

Die Fig. 12 zeigt eine weitere Ausführungsform der erfindungsgemäßen Vorrichtung. Bei
dieser werden zwei Lichtleiteranordnungen 225
und 226, z. B. aus Glasfasern, an Stelle des reflektierenden Streifens 209 verwendet, um das
Licht zu den Photozellen 7 und 8 umzulenken,
wobei es die Filter 227 bzw. 228 passiert. Wenn
die durch Reflektion an der Bahn 4 verursachte
Signalstärke diejenige übersteigt, die durch den
Durchtritt von Licht durch die Lichtleitergruppen
225 und 226 verursacht wird, so wird statt dessen
ein Filter über dem Fenster 5 des Lichtempfängers 6 vorgesehen.

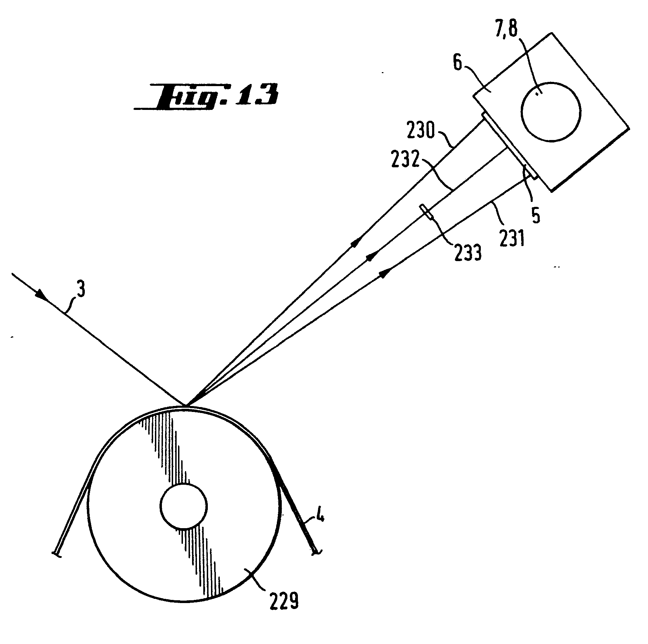

Die Fig. 13 zeigt, wie in einer weiteren Ausführungsform der Vorrichtung nach der Erfindung
die Bahn 4 längs der Abtaststrecke durch eine
hochglänzend polierte Walze 229 gestützt werden kann. Das von der Bahn 4 reflektierte Licht
ist oft über einen endlichen Bereich von Strahlungsrichtungen gestreut, der in typischer Weise
durch die in Fig. 13 durch Linien angedeuteten
Ebenen 230 und 231 begrenzt ist. Das Licht wird
in den Endbereichen der Abtaststrecke an der
polierten Walze 229 dementsprechend entlang
der Ebene 232 gespiegelt. Eine Anpassung der
durchschnittlichen Stärken der einerseits durch
die Bahn und andererseits durch die Walze hervorgerufenen Signale kann so ereicht werden,
daß ein dünner Streifen oder ein Plättchen 233
aus Filtermaterial geeigneter optischer Dichte in
der Ebene 232 angeordnet wird.

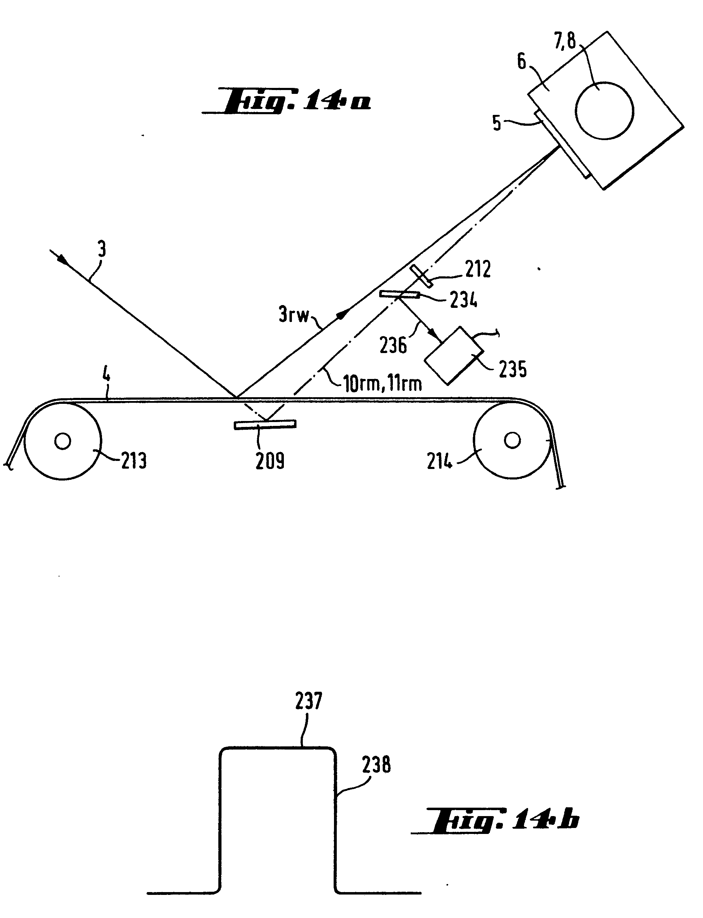

Die Fig. 14a und 14b zeigen eine weitere Ausführungsform des erfindungsgemäßen Systems,
die mit einem Bahnkantendetektor ausgerüstet
ist.

In der Fig. 14a ist ein Strahlenteiler 234 in die
durch die Lichtpfade umgelenkter Strahlen wie
z. B. 10rm und 11rm gebildete Ebene gestellt.

Dieser Strahlenteiler 234 lenkt einen Anteil des
umgelenkten Lichtes so, daß er, wie z. B. beim
Strahl 236 der Fall ist, in eine Hilfsphotozelle 235
einfällt.

Die Fig. 14b zeigt den Verlauf des Antwortsignals 237, das durch die Hilfsphotozelle 235 beim
Überqueren einer Bahnkante durch den Abtaststrahl 3 erzeugt wird. Die steile Amplitudenändeung 238 kann für elektronische Schaltzwecke
verwendet weden.

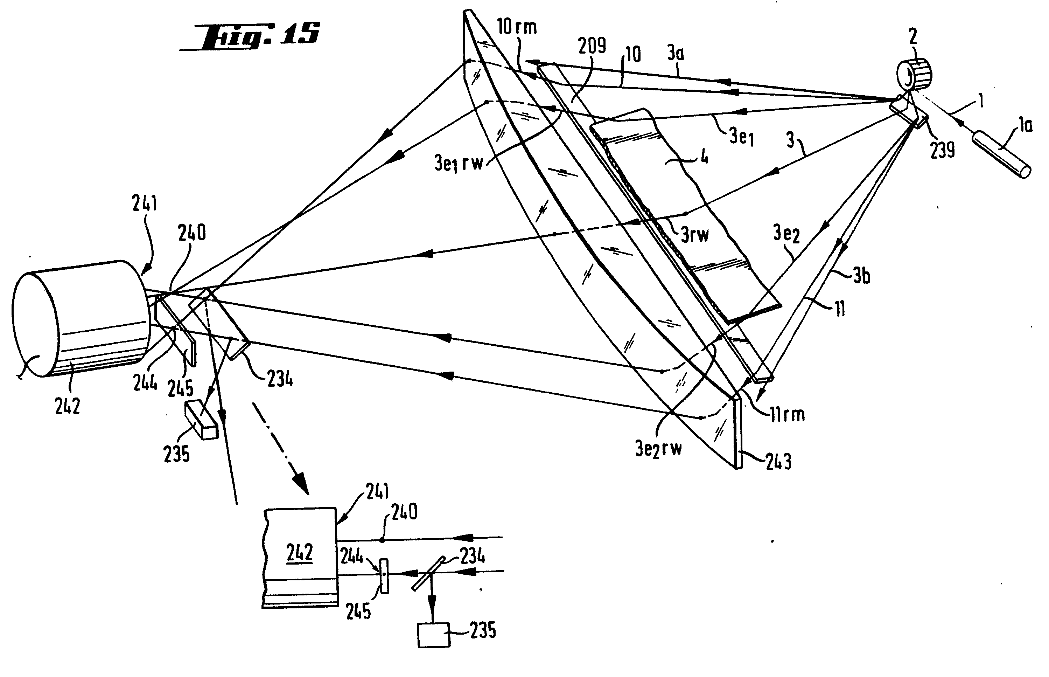

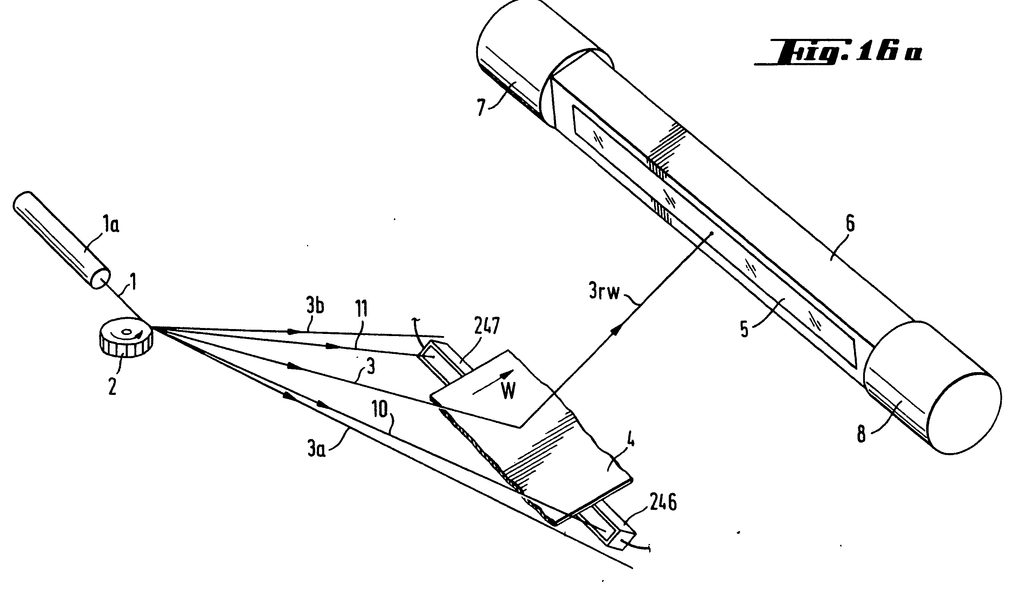

In der Fig. 15 wird noch eine weitere Ausführungsform der Vorrichtung nach der Erfindung
gezeigt, in welcher das Licht mit Hilfe einer Linse
in eine Photozelle 242 fokussiert wird. Der Strahl
1 aus einer Laserquelle wird auf ein rotierendes
Spiegelrad 2 projiziert, von welchem er reflektiert und nach weiterer Reflektion an einem Spiegel 239 zum Überstreichen einer durch die Endpunkte bei 3a und 3b begrenzten Abtaststrecke
veranlaßt wird, wobei der Abtaststrahl 3 auf die
Bahn 4 und zu beiden Seiten der Bahnkanten an
der Bahn vorbei auf den reflektierenden Streifen
209 auftrifft. Der zwischen den Strahlenpfaden
$3e_1$ und $3e_2$ die Bahn 4 überstreichende Abtaststrahl 3 wird durchdie Bahn reflektiert und bildet
einen Reflektionsstrahl 3rw, der einen zwischen
den Grenzstrahlengängen $3e_1rw$ und $3e_2rw$ auf
der ebenen Vorderseite der Fokussierlinse 243
gelegenen Bereich überstreicht und durch die
Linse in einem in der Nähe des Fensters 241 einer
Photozelle 242 gelegenen Brennpunkt 240 konzentriert wird, worauf er in das Eingangsfenster
241 einfällt. Strahlen, die wie z. B. $10_{rm}$ und $11_{rm}$ in
den zwischen den Bahnkanten und den Grenzstrahlengängen 3a und 3b gelegenen bahnfreien
Bereichen auf den Spiegel 209 auftreffen und
von diesem reflektiert werden, werden in ähnlicher Weise durch die Fokussierlinse 243 im
Brennpunkt 244 konzentriert und fallen dann
gleichfalls in das Eingangsfenster 241 der Photozelle 242. Die Anpassung der durch Reflektion an
der Bahn 4 einerseits und durch Spiegelung am
Reflektionsstreifen 209 andererseits erzeugten
Strahlen aneinander wird durch das Zwischenstellen eines Graukeils 245 im Brennpunkt 244
erreicht, wobei der Graukeil 245 aber im Brennpunkt 240 fokussierte Strahlen nicht abfangen
darf. Weiter ist ein Strahlenspalter 234 in den
Strahlengang unmittelbar vor dem Graukeil 245
eingefügt, um einen Anteil des vom Spiegel 209
reflektierten Lichtes auf die Hilfsphotozelle 235
zu lenken.

So ist in dieser Ausführungsform dafür Vorkehrung getroffen, daß das von der Bahn 4 reflektierte Licht in der einen Zone der lichtempfangenen Fläche der Photozelle 242 fokussiert
wird, während in ähnlicher Weise das vom Spiegel 209 reflektierte Licht in einer anderen Zone
derselben lichtempfangenden Fläche der Photozelle 242 fokussiert wird.

Durch Dazwischenstellen des Graufilters 245
nur in diesem zweiten Brennpunkt 244, aber nicht
im ersten Brennpunkt 240, wird die Anpassung
der betreffenden Intensitäten entsprechend der
durchschnittlichen Reflektion der Bahn und der Reflektion des Spiegels durch ein bloßes Verstellen des Grauteiles 245 ermöglicht. Dies ist besonders von Vorteil, wenn Erzeugnisse mit wesentlich unterschiedlichen Oberflächenreflektionseigenschaften überprüft werden sollen.

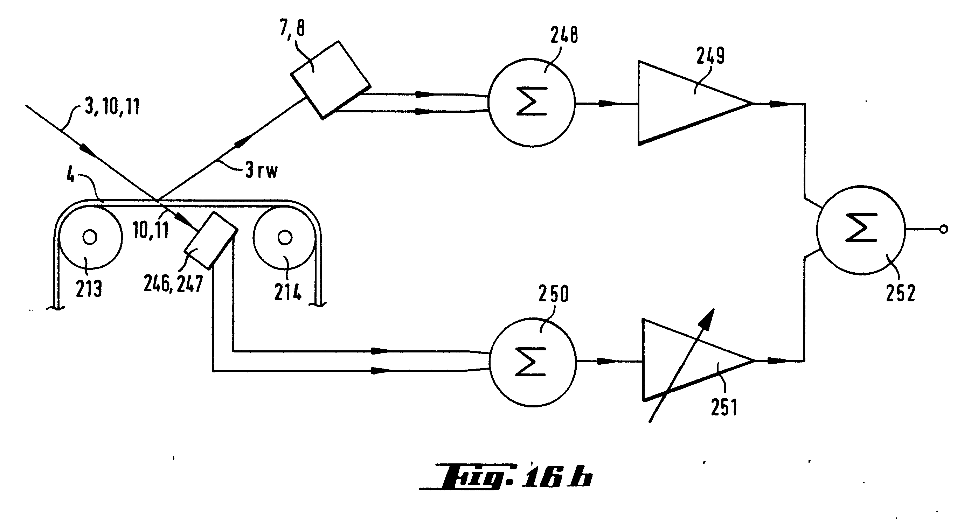

Die Fig. 16a und 16b zeigen, wie die Kombination von Signalen aus einer Anzahl von Photozellen in einer weiteren Ausführungsform des erfindungsgemäßen Systems vorteilhaft verwendet werden kann.

In der Ausführungsform nach Fig. 16a fällt der an der Bahn vorbeigehende Abtaststrahl 10 direkt auf eine erste neben und unter der Bahn 4 angeordnete Hilfsphotozelle 246, bevor er beim Überstreichen der Strecke 3a-3b die in Überstreichungsrichtung zuerst angetroffene Kante der Bahn 4 überquert. Entsprechend fällt der Abtaststrahl 11, nachdem er die Bahn 4, deren gegenüberliegende Kante überquerend, verlassen hat, auf eine zweite, neben der anderen Bahnkante angeordnete Hilfsphotozelle 247.

Die Fig. 16b zeigt schematisch dargestellt, wie durch von der Bahn 4 reflektierte Lichtstrahlen 3rw verursachte Signale aus den Photozellen 7 und 8 in einem Addierer 248 addiert und dann im Verstärker 249 verstärkt werden. In ähnlicher Weise werden durch die Lichtstrahlen 10 und 11 verursachte Signale aus den Hilfsphotozellen 246 und 247 in einem Addierer 250 addiert und dann in einem Regelverstärker 251 verstärkt. Der Regelverstärker 251 wird so eingestellt, daß die Amplitude seines Ausgangssignals gleich derjenigen des Verstärkers 249 wird. So wird in jedem Falle unmittelbar vor oder nach dem Überqueren einer Bahnkante durch den Abtaststrahl 3 jeder Strahl, gleichgültig ob es sich um den Hauptstrahl 3 selbst oder einen Strahl innerhalb des Streulichtkegels handelt, entweder durch die Bahn 4 reflektiert, so daß er in den Empfänger 6 einfällt und so auf die Photozellen 7 bzw. 8 gelangt, oder er fällt direkt auf die Photozelle 246 oder 247. Das von jedem solchen Einzelstrahl hervorgerufene Signal am Ausgang des Addierers 252 ist so praktisch stets das gleiche, gleichgültig, ob der Strahl von der Bahn reflektiert wurde oder nicht, und die allein verbleibenden Transienten in dem hieraus nach Filterung erhaltenen Signal sind diejenigen, die durch echte defekte Stellen erzeugt werden. Wiederum ist es hierdurch möglich, die gesamte Oberfläche der Bahn 4 zu inspizieren.

Das Signal aus dem Verstärker 251 kann beispielsweise auch, wie bereits erwähnt, für elektronische Schaltzwecke verwendet werden.

Durch das Verfahren nach der Erfindung werden abrupte Änderungen der in der Meßeinheit erzeugten elektronischen Signale beim Überqueren der Bahnkanten durch den Abtaststrahl auf ein Minimum herabgesetzt. Auch das Auftreten von Streulicht wird reduziert.

**Patentansprüche**

1. Verfahren zum Überprüfen von in seiner Längsrichtung bewegtem Bahnmaterial, wobei das Bahnmaterial mit einem aus einer Lichtquelle (1a) stammenden, quer zur Bewegungsrichtung der Bahn (4) und über ihre beiden Längskanten hinaus entlang eines Abtastweges gelenkten, schmalen Lichtstrahl (3, 3a, 3b, 10, 11) abgetastet wird und von der Bahn reflektiertes bzw. durchgelassenes Licht (3rw) auf einen ersten Lichtempfänger (6) einer Lichtmeßeinheit gelenkt wird, in welcher ein entsprechendes elektrisches Signal erzeugt wird, dadurch gekennzeichnet, daß die optischen Eigenschaften in Form des Reflexionsvermögens bzw. der Lichtdurchlässigkeit der Bahn (4) für zwei Abtastbereiche des Abtastweges, die rechts und links außerhalb der Bahn neben deren Längskanten liegen, optisch oder elektronisch in solcher Weise simuliert werden, daß die Stärke des elektrischen Signals in diesen Abtastbereichen praktisch der durchschnittlichen Stärke des während der Abtastung der Bahn erzeugten elektrischen Signals entspricht.

2. Verfahren nach Anspruch 1, dadurch gekennzeichnet, daß im optischen Pfad des genannten, an der Bahn (4) vorbeigehenden Lichtes ein Lichtmodulierungselement (109) vorgesehen wird, welches die Eigenschaften der Bahn (4) bezüglich des Lichtreflexionsvermögens bzw. der Lichtdurchlässigkeit simuliert.

3. Verfahren nach Anspruch 1 oder 2, dadurch gekennzeichnet, daß als abtastender Lichtstrahl (3) ein Laserstrahl verwendet wird.

4. Verfahren nach einem der Ansprüche 2 oder 3, dadurch gekennzeichnet, daß bei einer Bahn aus einem lichtdurchlässigen und dabei das Licht zerstreuenden Material ein polarisierter Lichtstrahl (3) verwendet wird und daß zwischen der Bahn (4) und dem ersten Lichtempfänger (6) als Lichtmodulierungselement ein lichtdurchlässiger Polarisator (109), insbesondere ein Streifen aus polarisierendem Material vorgesehen wird, der über die Längkanten der Bahn (4) beidseitig hinausragt, wobei der Polarisator (109) so orientiert wird, daß er den polarisierten Lichtstrahl (10, 11) in den zwei Abtastbereichen partiell auslöscht.

5. Verfahren nach einem der Ansprüche 2 oder 3, dadurch gekennzeichnet, daß bei einer Bahn (4) aus lichtreflektierendem Material der von der Bahnoberfläche reflektierte Anteil (3rw) des Lichtstrahls (3) auf den ersten Lichtempfänger (6) gerichtet wird, daß auf der von der Lichtquelle (1a) abgekehrten Seite der Bahn (4) Lichtumlenkmittel (209) so angeordnet werden, daß ein Anteil des die zwei Abtastbereiche treffenden Lichtstrahls (10, 11) zum ersten Lichtempfänger (6) hingelenkt wird, welcher auch das von der Bahn (4) reflektierte Licht (3rw) empfängt, und daß entweder im Pfad des von der Bahn (4) reflektierten Lichtes oder im Pfad des zum ersten Lichtempfänger (6) hin mit Hilfe der Lichtumlenkmittel (209) umgelenkten Lichtes als Lichtmodulierungselement ein Lichtdämpfungsfilter (212) solcher Stärke vorgesehen wird, daß die durchschnittliche Stärke des vom ersten Lichtempfänger (6) auf Grund des von der Bahn (4) reflektierten Lichtes erzeugten elektrischen Signals gleich der durchschnittlichen Stärke des vom ersten Lichtempfänger (6) auf Grund des mit Hilfe der Lichtumlenkmittel (209) zu ihm hin umgelenkten Lichtes erzeugten elektrischen Signals ist.

6. Verfahren nach Anspruch 5, dadurch gekennzeichnet, daß der Lichtdämpfungsfilter (212) im Pfad des umgelenkten Lichtes vorgesehen wird.

7. Verfahren nach Anspruch 5, dadurch gekennzeichnet, daß als Lichtumlenkmittel (209) ein reflektierendes Organ verwendet wird.

8. Verfahren nach Anspruch 7, dadurch gekennzeichnet, daß als lichtreflektierendes Organ ein Spiegel (209) verwendet wird, der auf der von der Lichtquelle (1a) abgewandten Seite der Bahn (4) und seitlich von den beiden Längskanten der Bahn (4) über die letztere hinausragend angeordnet wird.

9. Verfahren nach Anspruch 7, dadurch gekennzeichnet, daß ein abtastender Lichtstrahl (3) aus polarisiertem Licht benutzt wird und daß als lichtreflektierendes Organ und als Lichtmodulierungselement ein polarisierender Streifen (109) verwendet wird, der über die Bahnlängskanten zu beiden Seiten neben der Bahn (4) hervorstehend angeordnet und so orientiert wird, daß er das von ihm reflektierte Licht dämpft.

10. Verfahren nach Anspruch 7, dadurch gekennzeichnet, daß als lichtreflektierendes Organ eine polierte Walze (229) verwendet wird, welche die Bahn längs des Abtastwegs stützt.

11. Verfahren nach Anspruch 5, dadurch gekennzeichnet, daß als Lichtumlenkmittel Lichtleitungsmittel, insbesondere Glasfaserbündel (225, 226) verwendet werden.

12. Verfahren nach Anspruch 1, dadurch gekennzeichnet, daß das von der Bahn (4) reflektierte bzw. durchgelassene Licht auf den ersten Lichtempfänger (6) und das an der Bahn (4) innerhalb der zwei Abtastbereiche vorbeigehende Licht auf einen zweiten Lichtempfänger (246, 247) gerichtet wird, und daß die elektrischen Ausgangssignale der beiden Lichtempfänger (6, 246, 247) so aneinander angepaßt und addiert werden, daß das resultierende Summensignal praktisch über den gesamten vom Lichtstrahl überstrichenen Abtastweg konstant bleibt.

13. Vorrichtung zum Überprüfen von in einer Längsrichtung bewegtem Bahnmaterial mit einer Lichtquelle (1a) zur Erzeugung eines schmalen Lichtstrahls (3, 3a, 3b, 10, 11); mit Strahlführungsmitteln (2), welche den Lichtstrahl (3) entlang eines Abtastweges ablenken, der die Bahn quer zu ihrer Bewegungsrichtung und darüber hinaus die den Längskanten der Bahn jeweils links und rechts benachbarten Abtastbereiche überstreicht, mit einer einen ersten Lichtempfänger (6) umfassenden Meßeinheit zur Erzeugung eines elektrischen Ausgangssignals aus dem von der Bahn durchgelassenen oder reflektierten Licht; und mit Umlenkmitteln, die das von der Bahn (4) reflektierte bzw. durchgelassene Licht

auf den ersten Lichtempfänger (6) umlenken; gekennzeichnet durch optische oder elektronische Simuliermittel, welche die optischen Eigenschaften in Form des Reflexionsvermögens bzw. der Durchlässigkeit der Bahn (4) für die beiden den Bahnlängskanten benachbarten Abtastbereiche in solcher Weise simulieren, daß die Stärke des elektrischen Ausgangssignals in diesen Abtastbereichen praktisch der durchschnittlichen Stärke des während der Abtastung der Bahn erzeugten elektrischen Signals entspricht.

14. Vorrichtung nach Anspruch 13, dadurch gekennzeichnet, daß die Umlenkmittel befähigt sind, auch das durch die beiden Abtastbereiche an der Bahn (4) vorbeigerichtete Licht auf den genannten Lichtempfänger (6) zu dirigieren, und daß die Simuliermittel ein optisches Lichtmodulierungselement (109) umfassen, welches sich im optischen Pfad des die Abtastbereiche treffenden Lichtstrahls befindet.

15. Vorrichtung nach Anspruch 13, dadurch gekennzeichnet, daß der erste Lichtempfänger (6) zum Empfang von durch die Bahn (4) durchgelassenem Licht ausgebildet ist, daß die Lichtquelle (1a) polarisiertes Licht liefert, und daß das Lichtmodulierungselement (109) ein Polarisatorstreifen ist.

16. Vorrichtung nach Anspruch 15, dadurch gekennzeichnet, daß der Polarisatorstreifen (109) auf der von der Lichtquelle (1a) abgewandten Seite der Bahn (4) angeordnet ist und sich quer zur Bewegungsrichtung der Bahn (4) über ihre ganze Breite sowie über die Abtastbereiche erstreckt.

17. Vorrichtung nach Anspruch 11, dadurch gekennzeichnet, daß das Lichtmodulierungselement ein Graukeil (245) ist.

18. Vorrichtung nach einem der Ansprüche 13, 14 oder 17, dadurch gekennzeichnet, daß der erste Lichtempfänger (6) zum Empfang von durch die Bahn (4) reflektiertem Licht ausgebildet ist, und daß eine lichtreflektierende Oberfläche, vorzugsweise ein Spiegel (209), vorgesehen ist, der sich quer über die Bahn auf deren der Lichtquelle (1a) abgewandten Seite erstreckt und zu beiden Seiten über die Längskanten der Bahn (4) hinausragt.

19. Vorrichtung nach einem der Ansprüche 13, 14 und 17, dadurch gekennzeichnet, daß der erste Lichtempfänger (6) zum Empfang von durch die Bahn (4) reflektiertem Licht ausgebildet ist, und daß eine eine lichtreflektierende Oberfläche besitzende polierte Walze (229) vorgesehen ist, welche die Bahn (4) im Abtastbereich stützt.

20. Vorrichtung nach Anspruch 13, dadurch gekennzeichnet, daß die Meßeinheit einen zweiten Lichtempfänger sowie mit dem ersten und zweiten Lichtempfänger (6; 246, 247) assoziierte Verstärker (249, 251) und einen Addierer (252) für die Ausgangssignale der beiden Verstärker umfaßt, und daß die Umlenkmittel das an der Bahn (4) vorbeigehend innerhalb der Abtastbereiche eintreffende Licht (10, 11) auf den zweiten Empfänger lenken und daß die beiden Verstärker (249, 251) so aneinander angepaßt sind, daß das durch den Addierer erzeugte Summensignal über praktisch den gesamten durch den Lichtstrahl (3, 3a, 3b, 10, 11) überstrichenen Abtastweg konstant bleibt.

21. Vorrichtung nach einem der Ansprüche 13—20, dadurch gekennzeichnet, daß ein Bahnkantendetektor (234, 235) vorgesehen ist.

22. Vorrichtung nach einem der Ansprüche 13 bis 21, dadurch gekennzeichnet, daß der abtastende Lichtstrahl ein Laserstrahl ist.

## Claims

1. A method of inspecting web material moving in its longitudinal direction, which method comprises scanning the web material with a narrow light beam (3, 3a, 3b, 10, 11) originating from a light source (1a) directed transversely to the direction of movement of the web (4) and, along a scanning path, across its two longitudinal edges, and directing light reflected or transmitted by the web (3rw) to a first light receiver (6) of a light-measuring unit in which a corresponding electrical signal is produced, characterised in that the optical properties, in the form of the reflecting power and/or light transmission, of the web (4) are optically or electronically simulated for two scanning zones of the scanning path, which are located on the right and left adjacent to the lateral edges of the web, in such a manner that the strength of the electrical signal in these scanning zones corresponds substantially to the average strength of the electrical signal produced during the scanning of the web.

2. A method according to claim 1, characterised in that a light modulation element (109) is provided in the optical path of the said light passing the web (4), which element simulates the properties of the web (4) with regard to the reflecting power and/or light transmission.

3. A method according to claim 1 or 2, characterised in that a laser beam is used as the scanning beam (3).

4. A method according to either of claims 2 or 3, characterised in that, with a web (4) of light-transmitting and at the same time light-dispersing material, a polarised light beam (3) is used, and that between the web (4) and the first light receiver (6) there is provided, as a light-modulating element, a light-transmitting polariser (109), particularly a strip of polarising material, which protudes on both sides beyond the longitudinal edges of the web (4), the polariser (109) being so positioned that it partially extinguishes the polarised beam (10, 11) in the two scanning zones.

5. A method according to either of claims 2 and 3, characterised in that, with a web (4) of light-reflecting material, the proportion (3rw) of the light beam (3) reflected by the surface of the web is directed into the first light receiver (6); that, on the side of the web (4) remote from the light souce (1a), light-redirecting means (209) are so arranged that a proportion of the light beam (10, 11) impinging on the two scanning zones is directed into the first light receiver (6), which receives also the light (3rw) reflected from the web (4); and that either in the path of the light reflected from the web (4) or in the path of the light redirected to the first receiver (6) by means of the light-redirecting means (209) there is provided, as a light-modulating element, a light-attenuating filter (212) of such density that the average strength of the electrical signal produced by the first light receiver (6) by virtue of the light reflected from the web (4) is equal to the average strength of the electrical signal produced by the first light receiver (6) by virtue of the light redirected thereto by means of the light-redirecting means (209).

6. A method according to claim 5, characterised in that the light-attenuating filter (212) is located in the path of the redirected light.

7. A method according to claim 5, characterised in that the light-redirecting means (209) is a reflecting organ.

8. A method according to claim 7, characterised in that the light-reflecting organ used is a mirror (209), which is arranged on the side of the web (4) remote from the light source (1a) and to the side of the two longitudinal edges of the web (4), and protudes beyond these two edges.

9. A method according to claim 7, characterised in that the scanning beam (3) used is polarised light, and that there is used, as light-reflecting organ and a light-modulating element, a polarising strip (109), which is arranged to project on both sides beyond the longitudinal edges of the web (4), and is so positioned that it attenuates the light reflected from the web.

10. A method according to claim 7, characterised in that the light-reflecting means used is a polished roller (229) which supports the web along the scanning path.

11. A method according to claim 5, characterised in that the light-redirecting means is a light-conducting means, especialy glass-fibre bundles (225, 226).

12. A method according to claim 1, characterised in that the light reflected or transmitted by the web (4) is directed to the first light receiver (6), and the light passing the web (4) within the two scanning zones is directed to a second light receiver (246, 247), and that the electrical output signals of the two light receivers (6, 246, 247) are so matched and added that the resulting sum signal remains constant over substantially the whole scanning path scanned by the beam.

13. A device for inspecting web material moving in a longitudinal direction with a light source (1a) for producing a narrow light beam (3, 3a, 3b, 10, 11) with beam-directing means (2), which deflect the beam (3) along a scanning path which scans the web transversely to its direction of movement and, in addition, the scanning zones adjacent to the left and right of the longitudinal edges of the web; with a measuring unit embracing a first light receiver (6) for producing an electrical output signal from the light transmitted or reflected by the web; and with redirecting means which redirect the light reflected or transmitted by the web (4) to the first light receiver (6); characterised by optical or electronic simulating means which simulate the optical properties in the form of the reflecting power or light transmission of the web (4) for the two scanning zones adjacent to the longitudinal edges of the web in such a manner that the strength of the electrical output signal in these scanning zones substantially corresponds to the average strength of the electrical signal produced during the scanning of the web.

14. A device according to claim 13, characterised in that the redirecting means are capable of directing also the light passing the web within the two scanning zones to said light receiver (6), and that the simulating means comprise an optical light modulating element (109) which is situated in the optical path of the light beam impinging on the scanning zones.

15. A device according to claim 13, characterised in that the first light receiver (6) is designed to receive light transmitted through the web (4), that the light source (1a) supplies polarised light, and that the light-modulating element (109) is a polariser strip.

16. A device according to claim 15, characterised in that the polariser strip (109) is arranged on the side of the web (4) remote from the light source (1a), and extends, at right angles to the direction of movement of the web (4), over the whole width of the web and also over the scanning zones.

17. A device according to claim 14, characterised in that the light modulating element (245) is a neutral wedge filter.

18. A device according to any one of claims 13, 14 and 17, characterised in that the first light receiver (6) is designed to receive light reflected by the web (4), and that a light-reflecting surface, preferably a mirror, is provided, which extends transversely across the web on the side thereof remote from the light source (1a) and projects on both sides beyond the longitudinal edges of the web (4).

19. A device according to any one of claims 13, 14 and 17, characterised in that the first light receiver (6) is designed to receive light reflected by the web (4), and that a polished roller (229) having a light-reflecting surface is provided, which supports the web (4) in the scanning zone.

20. A device according to claim 13, characterised in that the measuring unit contains a second light receiver and also amplifiers associated with the first and second light receiver (6; 246, 247) and an adding device (252) for the output signals of the two amplifiers, and that the redirecting means direct the light (10, 11) passing the web (4) within the scanning zones to the second receiver, and that the two amplifiers (249, 251) are so matched that the sum signal produced by the adding device remains constant over substantially the whole scanning path scanned by the light beam (3, 3a, 3b, 10, 11).

21. A device according to any one of claims 13 to 20, characterised in that a web-edge detector (234, 235) is provided.

22. A device according to any one of claims 13 to 21, characterised in that the scanning beam is a laser beam.

**Revendications**

1. Procédé de contrôle de matière en forme de bande que l'on déplace longitudinalement et que l'on explore au moyen d'un mince pinceau de lumière (3, 3a, 3b, 10, 11) qui provient d'une source de lumière (1a) et qui est dévié le long d'un trajet d'exploration, lequel est dirigé transversalement à la direction du mouvement de la bande (4) et déborde au-delà des bords longitudinaux de cette bande, la lumière (3rw) réfléchie ou transmise par la bande étant dirigée sur un premier récepteur de lumière (6) d'une unité de mesure de lumière, laquelle produit un signal électrique correspondant, caractérisé par le fait que les propriétés optiques sous la forme de la réflectance ou de la transparence de la bande (4) sont simulées, optiquement ou électroniquement, pour deux domaines du trajet d'exploration qui sont situés à droite et à gauche de la bande, à l'extérieur de celle-ci, près de ses bords longitudinaux, la simulation étant faite de manière telle que l'intensité du signal électrique dans ces domaines corresponde pratiquement à l'intensité moyenne du signal électrique produit pendant l'exploration de la bande (4).

2. Procédé selon la revendication 1, caractérisé par le fait qu'il est prévu, sur le trajet optique de ladite lumière passant à côté de la bande (4), un élément modulateur de lumière (109) qui simule les propriétés, telles que réflectance ou transparence, de la bande (4).

3. Procédé selon la revendication 1 ou 2, caractérisé par le fait que le pinceau delumière explorateur (3) est un rayon laser.

4. Procédé selon l'une quelconque des revendications 2 ou 3, caractérisé par le fait que, dans le cas d'une bande en matière transparente ne dispersant pas la lumière, on utilise un pinceau de lumière polarisée (3), et par le fait qu'un polariseur transparent (109), notamment constitué par un élément oblong en matière polarisante, est prévu, en tant qu'élément modulateur de lumière, entre la bande (4) et le premier récepteur de lumière (6), ce polariseur débordant des deux côtés de la bande (4), au-delà des bords longitudinaux de celle-ci, et étant orienté de manière à éteindre le pinceau de lumière polarisée (10, 11) dans les deux domaines du trajet d'exploration.

5. Procédé selon l'une quelconque des revendications 2 ou 3, caractérisé par le fait que, dans le cas d'une bande en matière réfléchissante, la composante (3rw) du pinceau de lumière (3) réfléchie par la surface de la bande est dirigée sur le premier récepteur de lumière (6), par le fait que des moyens de déviation de lumière (209) sont agencés du côté de la bande (4) non en regard de la source de lumière (1a), d'une manière telle qu'une partie du pinceau de lumière (10, 11) rencontrant les deux domaines d'exploration soit déviée vers le premier récepteur de lumière (6) qui reçoit aussi la lumière (3rw) réfléchie par la bande (4), et par le fait qu'il est prévu en tant qu'élément modulateur de lumière sur le trajet de la lumière réfléchie par la bande (4), ou sur le trajet de la lumière déviée vers le premier récepteur de lumière (6) à l'aide des moyens de déviation (209), un filtre atténuateur de lumière (212) réalisant une atténuation telle que l'intensité moyenne du signal électrique que le premier récepteur de lumière (6) produit sous l'effet de la lumière réfléchie par la bande (4) soit égale à l'intensité moyenne du signal électrique produit par le premier récepteur de lumière (6) sous l'effet.de la lumière qui lui est envoyée par les moyens de déviation de lumière (209).

6. Procédé selon la revendication 5, caractérisé par le fait que le filtre atténuateur de lumière (212) est disposé sur le trajet de la lumière déviée.

7. Procédé selon la revendication 5, caractérisé par le fait que l'on utilise, en tant que moyens de déviation de lumière (209), un organe réfléchissant.

8. Procédé selon la revendication 7, caractérisé par le fait que l'organe réfléchissant utilisé est un miroir (209) disposé du côté de la bande (4) non en regard de la source de lumière (1a) et débordant latéralement au-delà des deux bords longitudinaux de la bande (4).

9. Procédé selon la revendication 7, caractérisé par le fait que le pinceau explorateur (3) utilisé est constitué de lumière polarisée, et par le fait que l'on utilise, comme organe réfléchissant et modulateur de lumière, un élément polariseur oblong (109) qui est agencé de manière à dépasser au-delà des deux bords longitudinaux de la bande (4) et est orienté de manière à atténuer la lumière qu'il réfléchit.

10. Procédé selon la revendication 7, caractérisé par le fait que l'on utilise, comme organe réfléchissant, un rouleau poli soutenant la bande le long du trajet d'exploration.

11. Procédé selon la revendication 5, caractérisé par le fait que l'on utilise, comme moyens de déviation de lumière, des moyens du genre guides de lumière tels que, notamment, des faisceaux de fibres de verre (225, 226).

12. Procédé selon la revendication 1, caractérisé par le fait que la lumière réfléchie ou transmise par la bande (4) est dirigée sur le premier récepteur de lumière 6), et la lumière passant à côté de la bande (4), à l'intérieur des deux domaines d'exploration, est dirigée sur un deuxième de lumière (246, 247), et par le fait que les signaux électriques de sortie des deux récepteur de lumière (6, 246, 247) sont mutuellement adaptés et additionnés de manière telle que le signal total résultant reste pratiquement constant sur toute l'étendue du trajet d'exploration balayé par le pinceau de lumière.

13. Dispositif de contrôle de matière en forme de bande que l'on déplace longitudinalement, comportant: une source de lumière (1a) pour engendrer un mince pinceau de lumière (3, 3a, 3b, 10, 11); des moyens de direction de lumière (2) qui déplacent le pinceau de lumière (3) le long d'un trajet d'exploration de manière à balayer la bande transversalement à la direction de son mouvement et à balayer en outre des domaines d'exploration voisins de la bande, à gauche et à droite de celle-ci; une unité de mesure comportant un premier récepteur de lumière (6), pour produire un signal de sortie électrique sous l'effet de la lumière réfléchie ou transmise par la bande, et des moyens de déviation qui font dévier, vers le premier récepteur de lumière (6), la lumière réfléchie ou transmise par la bande (4), caractérisé par des moyens simulateurs optiques ou électroniques qui simulent les propriétés optiques telles que réflectance ou transparence de la bande (4), cela pour les deux domaines d'exploration voisins des deux bords longitudinaux de la bande, de manière telle que l'intensité du signal de sortie électrique dans ces domaines d'exploration corresponde pratiquement à l'intensité moyenne du signal électrique produit pendant l'exploration.

14. Dispositif selon la revendication 13, caractérisé par le fait que les moyens de déviation sont également capables de diriger, sur ledit récepteur de lumière (6), la lumière passant par les deux domaines d'exploration situés à côté de la bande, et par le fait que les moyens simulateurs comportent un élément optique modulateur de lumière (109) disposé sur le trajet optique du pinceau de lumière allant aux domaines d'exploration.

15. Dispositif selon la revendication 13, caractérisé par le fait que le premier récepteur de lumière (6) est agencé de manière à recevoir de la lumière transmise au travers de la bande (4), par le fait que la source de lumière (1a) fournit de la lumière polarisée, et par le fait que l'élément modulateur de lumière (109) est un élément polariseur ayant une forme oblongue.

16. Dispositif selon la revendication 15, caractérisé par le fait que l'élément polariseur (109) est agencé du côté de la bande (4) non en regard de la source de lumière (1a) et s'étend transversalement à la direction du mouvement de la bande (4), sour toute la largeur de celle-ci ainsi que sur les domaines d'exploration.

17. Dispositif selon la revendication 14, caractérisé par le fait que l'élément modulateur de lumière est un coin absorbant (245).

18. Dispositif selon l'une quelconque des revendications 13, 14 ou 17, caractérisé par le fait que le premier récepteur de lumière (6) est constitué pour recevoir de la lumière réfléchie par la bande (4), et par le fait qu'il y a une surface réfléchissante, de préférence un miroir (209), qui s'étend transversalement à la bande, du côté de celle-ci non en regard de la source de lumière (1a) et déborde des deux côtés de la bande, au-delà des bords longitudinaux de celle-ci (4).

19. Dispositif selon l'une quelconque des revendications 13, 14 et 17, caractérisé par le fait que le récepteur de lumière (6) est aménagé de manière à recevoir de la lumière réfléchie par la bande (4), et par le fait qu'un rouleau poli (229), ayant une surface réfléchissante, soutient la bande (4) dans la zone d'exploration.

20. Dispositif selon la revendication 13, caractérisé par le fait que l'unité de mesure comporte un deuxième récepteur de lumière ainsi que des amplificateurs (249, 251) associés au premier et au deuxième récepteurs de lumière (6; 246, 247), et un additionneur (252) pour former la somme des signaux de sortie des deux amplificateurs, par le fait que les moyens de déviation font dévier, en l'envoyant sur le deuxième récepteur, la lumière (10, 11) arrivant à l'intérieur des domaines d'exploration en passant à côté de la bande (4), et par le fait que les deux amplificateurs (249, 251) sont mutuellement ajustés de manière que le signal somme produit par l'additionneur reste constant sur pratiquement tout le trajet d'excursion balayé par le pinceau de lumière (3, 3a, 3b, 10, 11).

21. Dispositif selon l'une quelconque des revendications 13 à 20, caractérisé par la présence d'un détecteur de fin de bande (234, 235).

22. Dispositif selon l'une quelconque des revendications 13 à 21, caractérisé par le fait que le pinceau de lumière explorateur est un rayon laser.

Fig. 1

Fig. 2

Fig. 3

**Fig. 4 a**

**Fig. 4 b**

*Fig. 5 a*

*Fig. 5 b*

*Fig. 6 a*

*Fig. 6 b*

*Fig. 7a*

4

109

5

124

6

7

3

4

109

124

5

6

125

126

*Fig. 7c*

*Fig. 7b*

Fig. 8

**Fig. 9**

0 069 061

*Fig. 10 a*

*Fig. 10 b*

*Fig. 11 a*

*Fig. 11 b*

*Fig. 12*

Fig. 13

**Fig. 14a**

**Fig. 14b**

**Fig. 15**

0 069 061

Fig. 16a

Fig. 16 b